(19) Europäisches Patentamt
European Patent Office
Office européen des brevets

(11) Publication number: 0 044 728 A2

# (12) EUROPEAN PATENT APPLICATION

(21) Application number: 81303295.0

(22) Date of filing: 17.07.81

(51) Int. Cl.³: C 03 C 3/26
C 03 C 3/20, C 03 C 23/00

(30) Priority: 23.07.80 US 171655

(43) Date of publication of application:
27.01.82 Bulletin 82/4

(84) Designated Contracting States:
AT BE DE FR GB NL

(71) Applicant: CORNING GLASS WORKS
Houghton Park
Corning New York 14830(US)

(72) Inventor: Beall, George Halsey
106 Woodland Drive
Big Flats New York(US)

(72) Inventor: Waldron, Richard William
405 Willow Street
Big Flats New York(US)

(72) Inventor: Hoda, Syed Nurul
735 Algonquin Drive
Horseheads New York(US)

(74) Representative: Smith, Sydney et al,
High Holborn House 52/54 High Holborn
London WC1V 6SH(GB)

## (54) Polychromatic and potentially polychromatic glasses and production thereof.

(57) A polychromatic glass, at least a portion of which contains microcrystals of alkali fluoride in a concentration of at least 0.005%, by volume, and is integrally coloured by metallic silver particles less than 200Å ($2 \times 10^{-8}$ m) in the smallest dimension, the silver particles being deposited (a) as discrete colloidal particles, (b) within the microcrystals and/or (c) on the surface of the microcrystals and/or (c) on the surface of the microcrystals, characterised in that the glass contains an oxide of copper, samarium, terbium, praeseodymium and or europium as a sensitising agent is disclosed.

A process for the production of such a glass characterised in that it comprises melting a glass batch containing the constituents of an alkali fluoride and at least one silver halide selected from silver chloride, silver bromide and silver iodide, and at least one sensitising agent selected from the oxides of copper, samarium, terbium, praeseodymium and europium; forming the melt; exposing at least a portion of the glass to ultra-violet radiation at ambient temperature; heating the exposed glass to a temperature between the transformation range thereof and the softening point thereof to cause growth of microcrystals of alkali fluoride with at least one silver halide selected from silver chloride, silver bromide and silver iodide; subjecting the glass to a second ultra-violet radiation exposure and a second heat treatment to cause metallic silver particles less than 200Å ($2 \times 10^{-8}$ m) in the smallest dimension to be deposited as discrete colloidal particles, or within or on the surface of the alkali fluoride microcrystals; and cooling the glass is also disclosed.

A potentially polychromatic glass characterised in that it comprises an alkali metal silicate base glass containing dissolved therein an alkali fluoride, at least one silver halide selected from silver chloride, silver bromide and silver iodide, and at least one sensitising agent selected from the oxides of copper, samarium, terbium, praeseodymium and europium, and optionally tin oxide and or antimony oxide as a thermoreducing agent is further disclosed.

The present invention overcomes the problems associated with the conventional use of cerium as a sensitiser.

EP 0 044 728 A2

# "POLYCHROMATIC AND POTENTIALLY POLYCHROMATIC GLASSES AND PRODUCTION THEREOF"

This invention relates to polychromatic and potentially polychromatic glasses and to the production thereof.

Polychromatic glass is a form of photosensitively colourable glass. It is a transparent glass capable of having developed therein a range of colours that essentially span the colour spectrum. Colour is developed in a polychromatic glass by certain combinations of radiation exposure and thermal treatment. Variation of colour within a given glass results primarily from variation in the initial exposure flux which is defined as the product of radiation intensity and exposure time.

United States Patent No. 4,017,318 describes the physical and chemical characteristics of polychromatic glasses; also, general methods for developing a range of colours in such glasses.

As is disclosed therein, polychromatic glasses may be composed of a wide range of base compositions. However, each must contain silver, an alkali metal oxide (preferably $Na_2O$), fluoride and at least one halide selected from chloride, bromide and iodide. The glasses may be irradiated using either high energy or actinic radiations. When the actinic radiation is supplied as ultra-violet radiation, cerium oxide ($CeO_2$) is a required component of the glass composition.

In one of the described methods, the glass is initially exposed to high energy or actinic radiations selected from high velocity electrons, X-radiations and actinic radiations in the ultra-violet portion of the spectrum, preferably in the range of from 2800 to 3500Å (from $2.8 \times 10^{-7}$ to $3.5 \times 10^{-7}$ m). This exposure develops a latent image in the glass.

The intensity and duration of the exposure primarily determine the final colour which will be produced in the glass.

Thereafter, the glass is subjected to a heat treatment at a temperature between the transformation range thereof and the softening point thereof. This causes precipitation of colloidal silver particles in situ to act as nuclei. When a transparent final product is desired, the heat treatment is of such duration as to effect the precipitation of colloidal silver nuclei and to cause the growth thereon of extremely small microcrystals of alkali metal fluoride-silver halide, e.g. NaF + AgCl and/or AgBr and/or AgI. If an opal glass product is sought, the heat treatment will be continued for a sufficient period of time not only to promote the precipitation of colloidal silver nuclei, but also to effect the growth of the microcrystals on the silver nuclei to a size large enough to scatter light.

The nucleated glass is then cooled, conveniently to room temperature, but, in any event, to a temperature at least 25C° below the strain point of the glass. Next, it is again exposed to high energy or actinic radiations. This second exposure intensifies the colour, the hue of which was previously determined by the first exposure. Then, the glass is re-heated to a temperature between about the transformation range and the softening point of the glass to produce the desired colour in the glass. It has been theorised that submicroscopic particles of metallic silver are precipitated as discrete colloidal particles and/or deposited on the surface and/or within the alkali metal fluoride-silver halide microcrystals.

The mechanism of the colour phenomenon is not undisputably known. However, the quantity of silver precipitated and the geometry thereof, as well as,

perhaps, the refractive index of the crystals, are deemed to determine the colour produced. In any event, the colours are achieved with very low silver contents and exhibit characteristics similar to interference colours. Hence, it was surmised that at least one of the following three circumstances is present: (1) discrete colloidal particles of silver less than 200Å ($2 \times 10^{-8}$m) in the smallest dimensions; (2) metallic silver deposited within alkali fluoride-silver halide microcrystals, the silver-containing portion of the microcrystals being less than 200Å ($2 \times 10^{-8}$ m) in the smallest dimensions; and (3) metallic silver deposited on the surface of the microcrystals, the silver-coated portion of the microcrystals being less than 200Å ($2 \times 10^{-8}$ m) in the smallest dimension.

The reference discloses that the heat treatment after each exposure to high energy or actinic radiation may consist of a series of heatings and coolings rather than a single heat treating cycle. This does not change the colour developed, but may improve colour intensity.

The reference further teaches a sequence of colours that may be developed by progressively increasing the magnitude of the exposure flux in the initial exposure step. Thus, progressively increasing the radiation flux (by increasing intensity, time or both) succesively produces pale yellow, green, blue, violet, red, orange and dark yellow colours.

United States Patent No. 4,092,139 discloses an alternative colour developing procedure whereby the second exposure (the re-exposure) of the above method is carried out at a temperature of from 200 to 410°C. to cause the metallic silver to precipitate. This obviates the separate re-heating step.

Also United States Patent No. 4,134,747 describes a procedure wherein the potentially polychromatic glass is melted in a reducing atmosphere. During the colour development procedure, this modification produces a so-called "reverse opal" effect. Thus, exposed portions of the glass remain transparent, although coloured, and unexposed portions of the glass become opacified.

The first-mentioned reference indicates that the exact reaction path leading to colouration is not known with certainty. However, a proposed explanation is that silver nuclei are photosensitively precipitated using cerous ions as a photosensitising agent, as illustrated by the following equation: $Ag^{+} + Ce^{3+} + h\nu \rightarrow Ag^{o} + Ce^{4+}$. The nucleation and growth of complex silver plus alkali metal (Na) halide crystals is then proposed as follows:

$$(Ag^{o})_{n} + X(Na^{+}Ag^{+}) + xX^{-} \xrightarrow{heat} C$$

wherein C represents a crystallite of the nature $(Ag^{o})_{n}x(Na^{+}+ Ag^{+})X$; and $X^{-}$ represents a halide ion. The development of the coloured species, resulting from a second radiation step and second heat treatment, is then expressed as:

$$C + mAg + h\nu \xrightarrow{heat} CmAg^{o}.$$

wherein $CmAg^{o}$ represents a crystal having granular particles of metallic (m) silver formed on, or dispersed within, it.

This reference concludes that, when ultraviolet light is used as the source of radiation, at least 0.01% $CeO_2$ is required as a photosensitising agent. To demonstrate this requirement, the reference sets forth Comparative Examples 17 and 18. The glasses of these Examples are identical in composition and treatment, except that the glass of Example 18 contains $CeO_2$ and that of Example 17 does not. Similarly, the glass of Example 18 is reported to function as a polychromatic glass while that of Example 17 does not.

Cerium oxide, in the form of $Ce_2O_3$ or cerous

ions ($Ce^{3+}$), is a very effective activator having a high quantum efficiency. However, it also has a high aborptivity in the ultra-violet region of the spectrum. Consequently, penetration of ultra-violet radiation into a cerium-containing glass occurs only in a shallow surface layer. This, in turn, results in a correspondingly shallow colour layer in a cerium-sensitised polychromatic glass.

It would be desirable, then, to have available a sensitising agent having low absorption for the activating wavelength of radiation. This would enable the production of colour to a substantial depth in a glass. Also, with two or more activators that are sensitive at different wavelengths, it would be possible to develop different colours at different depths in a glass article.

Furthermore, the cerous ion level may be increased in a glass to shorten processing time or otherwise enhance glass behaviour. However, there is then a tendency for the tail of the absorption curve to extend into the visible and produce a yellow colour. It would then be desirable to have a sensitiser exibiting adsorption at shorter wavelengths. This would permit very high levels of sensitiser to be used without uncontrolled development of colour.

It is a primary purpose of the present invention to meet these various needs and problems.

Contrary to prior experience and belief, it has now been found that cerium oxide ($CeO_2$) is not required as a photosensitising agent in a polychromatic glass. Rather, it has been found that a complete range of polychromatic colours may be developed utilizing one or more oxides selected from copper, samarium, terbium, praeseodymium and europium oxides to activate the glass.

In general, the characteristics of the present glasses and the effective methods of treatment, otherwise closely parallel those of known polychromatic glasses. However, the present method is limited to activation of the glass by ultra-violet radiation. This takes advantage of the absorption and sensitising characteristics of the present glasses and more particularly the unique sensitising agents thereof.

The present invention relates to a polychromatic glass article wherein at least a portion thereof is integrally coloured by silver, the portion containing microcrystals of alkali fluoride in a concentration of at least 0.005%, by volume, the silver being in the form of metallic particles less than 200Å ($2 \times 10^{-8}$ m) in the smallest dimension, and optionally being dispersed within or deposited on the crystals, the glass containing one or more oxides of copper, samarium, terbium, praeseodymium and europium as an activating agent.

The present invention also relates to a process for the production of a polychromatic glass article, wherein at least a portion of the article is integrally coloured by silver, consisting of melting a glass batch containing the constituents of an alkali fluoride and at least one silver halide selected from silver chloride, silver bromide and silver iodide, and at least one sensitising agent selected from the oxides of copper, samarium, terbium, praeseodymium and uropium, forming such melt into a glass article, exposing at least a portion of the article to ultra-violet radiation at ambient temperature, heating the exposed glass to a temperature between the transformation range thereof and the softening point thereof for a sufficient period of time to cause growth of microcrystals of alkali fluoride with at least one silver halide selected from silver chloride, silver bromide and silver iodide, thereafter subjecting the article to a second ultra-violet

radiation exposure and a second heat treatment to cause metallic silver particles less than 200Å ($2 \times 10^{-8}$ m) in the smallest dimension to be deposited as discrete colloidal particles, or within or on the surface of the alkali fluoride microcrystals, and cooling the article.

Accordingly, in one embidiment, the present invention provides a polychromatic glass, at least a portion of which contains microcrystals of alkali fluoride in a concentration of at least 0.005%, by volume, and is integrally coloured by metallic silver particles less than 200Å ($2 \times 10^{-8}$ m) in the smallest dimension, the silver particles being deposited (a) as discrete colloidal particles, (b) within the microcrystals and/or (c) on the surface of the microcrystals, characterised in that the glass contains an oxide of copper, samarium, terbium, praeseodymium and/or europium as a sensitising agent.

In another embodiment, the present invention provides a process for the production of such a glass characterised in that it comprises melting a glass batch containing the constituents of an alkali fluoride and at least one silver halide selected from silver chloride, solver bromide and silver iodide, and at least one sensitising agent selected from the oxides of copper, samarium, terbium, praeseodymium and europium; forming the melt; exposing at least a portion of the glass to ultra-violet radiation at ambient temperature; heating the exposed glass to a temperature between the transformation range thereof and the softening point thereof to cause growth of microcrystals of alkali fluoride with at least one silver halide selected from silver chloride, silver bromide and silver iodide; subjecting the glass to a second ultra-violet radiation exposure and a second heat treatment to cause metallic silver particles less than 200Å ($2 \times 10^{-8}$ m) in the smallest dimension to

be deposited as discrete colloidal particles, or within or on the surface of the alkali fluoride microcrystals; and cooling the glass.

In a further embodiment, the present invention provides a potentially polychromatic glass characterised in that it comprises an alkali metal silicate base glass containing dissolved therein an alkali fluoride, at least one silver halide selected from silver chloride, silver bromide and silver iodide, and at least one sensitising agent selected from the oxides of copper, samarium, terbium, praeseodymium and europium and optionally tin oxide and/or antimony oxide as a thermoreducing agent.

Certain references relating to polychromatic glass have been mentioned. In addition, the oxides used in accordance with the present invention have been disclosed as glass additives for other purposes.

A photosensitive glass is altered, by exposure to actinic type radiation, in such a manner that irradiated areas are capable of heat-developed colouration while non-irradiated areas remain unchanged. United States Patent Nos. 2,326,012 and 2,422,472 disclose that copper-containing glasses may be rendered photosensitive when melted reducingly, e.g. using tin oxide as a reducing agent in the melt. United States Patent No. 2,515,938 discloses enhancing photosensitivity in such glasses by adding cerium oxide ($CeO_2$). United States Patent No. 2,515,936 discloses corresponding silver-containing photosensitive glasses.

Photochromic glasses, also referred to as "phototropic glasses", are characterised by the optical transmittance thereof varying reversibly with the intensity of incident actinic radiation. The basic disclosure in this area, United States Patent No. 3,208,860, describes the presence of silver halide microcrystals as an active agent in such glasses. It further discloses that a reducing agent, such as an oxide of arsenic,

antimony, iron or copper, may enhance metallic silver formation. United States Patent Nos. 3,269,847 and 3,278,319 describe phototropic (photochromic glasses wherein europhous ions ($Eu^{2+}$) or cerous ions ($Ce^{3+}$) are the active agent. Such ions are said to be excited by short wavelength radiation to form trapped electron colour centres.

Luminescent phosphor materials are widely used and well known. Numerous proposals have been made for glasses exhibiting similar properties, but commercial success has been elusive. United States Patent No. 2,049,765 discloses bringing together in a glass the ground mass and the sensitising metal of a phosphor material. The wide range of sensitising metals mentioned includes the rare earth metals and copper. United States Patent No. 3,323,926 discloses silver-containing, silicate glasses that are rendered fluorescent by irradiation and heat treatment. The presence of tin and/or cerium oxides enhances sensitivity. A series of United States Patents Nos. 3,440,172; 3,506,587; 3,522,190 and 3,522,191, discloses numerous activator oxides in photoluminescent glasses. These include oxides of copper, tin, antimony, samarium and europium. United States Patent No. 3,654,172 discloses terbium-activated radioluminescent glasses, while United States Patent No. 4,038,203 discloses thallium or silver with europium or terbium in phosphate photoluminescent glasses.

The sensitising or activating agents employed in the present glasses are the essential distinguishing characteristic. Thus, the present invention is based on introducing one or more of the oxides of copper, samarium terbium, praeseodymium and europium into a polychromatic glass and maintaining such oxide(s) in a lower oxidation or valence state to at least partially replace cerium oxide as a sensitising agent.

Heretofore, cerous ions ($Ce^{3+}$) were considered a

necessary and unique sensitising agent in a polychromatic glass when ultra-violet light was employed as the activating radiation. Now, they may be replaced entirely if desired. However, the presence of cerous ions is not necessarily precluded and they may be present as a secondary or supplemental sensitiser.

As compared to cerous ions, the present sensitisers tend to be responsive to lower wavelength radiation, as well as being less aborptive of such radiation. Hence, it is contemplated that a glass containing, for example, cerium and samarium oxides might be exposed, successively, to 300 nm radiation and 270 nm radiation. The cerium oxide would be effective as a sensitiser at the 300 nm wavelength, while the samaria would be effective at the lower wavelength.

Even trace amounts of the sensitising agents appear to have some effect. However, as a practical matter, the content of sensitising agent will be at least 0.01%, by weight, of the glass. The effective amount to produce a given colour effect will vary with exposure flux (time and/or intensity), base glass composition, halide and silver concentrations and processing factors. Amounts of up to 0.25% have been used effectively and larger amounts may be employed, although not necessarily to advantage.

Other minor additives are employed in conventional manner and amount. Thus, a sodium silicate base glass is contemplated that contains at least 0.0005% silver (Ag), at least one percent fluorine (F) and sufficient chlorine (Cl), bromine (Br) and/or iodine (I) to react stoichiometrically with the silver. In addition to these additives, it is desirable to employ from 0.01 to 1% of antimony and/or tin oxides as a thermoreducing agent.

Except as otherwise indicated, the present invention does not contemplate any substantial change in previously disclosed methods of treatment. Reference may

be made to the above-mentioned references for further details of the conventional techniques. For instance, the present sensitisers, like cerous ions, are effective only with ultra-violet radiation. Hence, use of a high energy source of radiation is not contemplated.

In general, the present glasses will be exposed to a source of ultra-violet radiation which may be selected from well known sources, such as mercury and mercury-xenon vapour arc lamps. The initial exposure determines the ultimate colour which only appears after subsequent treatment. Colour will depend on exposure flux which is a product of time and intensity.

The exposed glass, having a latent image or colour development therein, is heat treated at a temperature between the glass transformation temperature and softening point thereof. This causes growth of alkali metal fluoride-silver halide microcrystals on colloidal silver nuclei.

The glass is then exposed to ultra-violet radiation a second time. This may be in conjunction with a second heat treatment, as taught in United States Patent No. 4,092,139, or may be a step separate from the final heat treatment. If the second heat treatment is separate, it too should be at a temperature between the glass transformation temperature and softening point thereof. However, if a combined radiation and heat treatment is employed, a substantially lower temperature will be employed. As explained below, a secondary feature of the present invention is a rather lower temperature for such combined treatment which will be below 300°C.

The theory of the present invention will now be further explained relative to glasses containing copper oxide as a sensitising agent. However, it is believed that each of the present sensitisers functions in similar manner. Hence, a corresponding explanation with reference to any one of the sensitisers would be equally valid and

appropriate. However, copper oxide is the presently-preferred lower wavelength sensitiser.

The present studies show that monovalent (cuprous) copper ions are capable of activating silver colloids and effecting photosensitive nucleation of sodium fluoride, in a similar manner to cerous ions ($Ce^{3+}$). By analogy with the explanation offerred in United States Patent No. 4,017,318 for the role played by cerium, it appears that, under ultra-violet exposure, copper may donate electrons to ionic silver according to the following equation:

$$Cu^{+} + Ag^{+} \rightarrow Cu^{2+} + Ag^{o}$$

It has been observed that a 1 mm thick glass sample containing 0.025% $Cu_2O$ shows a gradual transmission cut-off from 85% at 320 nm to 5% at 270 nm. Furthermore, peak absorption for the cuprous ion, in various types of glass, has been reported at values of from 230 to 250 nm. These wavelength values are substantially shorter than for cerous ions where peak absorption is about 300 nm and sensitivity is in the range of from 270 to 350 nm.

The shorter wavelength absorption characteristics of copper, as well as of the other sensitisers, provides distinct advantages over cerium. For example, larger percentage additions may be made without concern for producing an absorption tail in the visible spectral region. This avoids the condition of a yellow colour throughout the glass. As a consequence, copper levels over 0.25% may be employed without background colour problems.

In general, the same range of colours may be produced in the present glasses as with cerium-sensitised glasses. However, exposure and heat treating conditions will vary somewhat and routine experimentation is necessary to ascertain optimum conditions in a particular glass.

For example, copper-activated glasses are sensitive to redox conditions. This may be observed visually. Excess reduction tends to give the glass a

yellow cast due to precipitated silver and excess oxidation imparts a blue colour due to cupric ions ($Cu^{2+}$). Proper redox conditions leave a colourless glass. As in earlier polychromatic glasses, redox conditions may be controlled using thermoreducing agents, preferably, antimony oxide additions (oxidation) and tin oxide additions (reduction).

No effect of copper ions on the range of available polychromatic colours has been observed. Nevertheless, an interesting effect on treatment conditions has been observed. Thus, at a 0.1% CuO level, the initial exposure time required for a given colour effect is about twice the corresponding time with cerium. When the second heat treatment and second exposure are carried out simultaneously, as taught in United States Patent No. 4,092,139 a temperature of 300°C is normally used in the case of a cerium-activated glass. However, this temperature produces dark brown and green colours in a copper-containing glass. Accordingly, it has been found necessary to reduce the temperature to a lower value to produce the normal range of colours. This suggests that copper, unlike cerium, may be dispersed in the glass initially, but somehow becomes associated with the halide crystallites in the final step. This may be explained on the basis that the cuprous ion ($Cu^{+}$), unlike the cerous ion ($Ce^{3+}$), is monovalent. This, in turn, enables it to enter the halide crystal in partial substitution for the sodium ion ($Na^{+}$) or the silver ion ($Ag^{+}$).

The present invention is further illustrated in the following.

In one experiment, a simple alkali silicate glass was chosen as a base glass. While the basic formulation of this glass was held constant, a variety of different additive combinations was used to make a comparative study. The base glass formulation, in parts,

by weight, on the oxide basis, consisted of 72 parts $SiO_2$, 16 parts $Na_2O$, 6.7 parts $Al_2O_3$ and 4.8 parts ZnO.

Table 1 below sets forth several of the additive combinations used to supplement this base glass in developing glass batch formulations for the present studies. It is not known with which cation(s) the halides are combined. Hence, they are merely reported as, say, fluoride and chloride in accordance with conventional glass analytical practice. Likewise, inasmuch as the silver is present in such small amounts, it is simply tabulated as Ag.

The actual batch ingredients may comprise various materials, for example oxides or other compounds, which, when melted together, will be converted into the desired constituents in the proper proportions. The halides were commonly added as alkali metal halides. Occasionally, when $Sn^{2+}$ was employed as a thermoreducing agent, $SnCl_2$ was utilized as a batch material for that purpose. Inasmuch as the sum of the individual glass constituents approximates 100, each may, for practical purposes, be deemed to be present in weight percent. The following samples represent laboratory melts. However, it will be recognised that large-scale commercial melts, utilising pots or continuous tanks, may be undertaken with the present glasses.

Batches of approximately 1000 grams were compounded, the ingredients ball-milled together to assist in obtaining a homogeneous melt and then run into platiunum crucibles. The filled crucibles were placed into an electrically-fired furnace operating at about 1450°C and maintained therein for from 4 to 6 hours with stirring. The melts were then poured into steel moulds to produce slabs about 6 inches x 6 inches x ½ inch (15 cm. x 15. cm x 1.2 cm). The slabs were immediately transferred to an annealer operating at from 450 to 480°C. The annealed slabs were colourless,

transparent glass.

During the melting step, up to as much as 50%, by weight, of the halide constituents and up to 30%, by weight, of the silver, may be lost by volatilisation.

TABLE 1

| | 1 | 2 | 3 | 4 | 5 | 6 | 7 | 8 | 9 |
|---|---|---|---|---|---|---|---|---|---|
| F | 2.44 | 2.50 | 2.50 | 2.50 | 2.50 | 2.50 | 2.50 | 2.50 | 2.51 |
| Br | 0.08 | 1.28 | 1.28 | 1.28 | 1.28 | 1.05 | 1.05 | 1.05 | 1.28 |
| Cl | 0.53 | - | - | - | - | - | - | - | - |
| Ag | 0.01 | 0.01 | 0.01 | 0.01 | 0.01 | 0.01 | 0.01 | 0.01 | .0125 |
| $Sb_2O_3$ | 0.49 | 0.20 | 0.20 | 0.20 | 0.20 | 0.20 | 0.20 | 0.20 | 0.20 |
| SnO | 0.10 | 0.05 | 0.05 | 0.05 | 0.05 | 0.05 | 0.05 | 0.05 | 0.05 |
| $CeO_2$ | - | - | - | - | - | 0.05 | 0.03 | 0.01 | - |
| CuO | 0.10 | - | - | - | - | - | 0.05 | 0.05 | - |
| $Sm_2O_3$ | - | 0.03 | - | - | - | - | - | - | 0.03 |
| $Pr_2O_3$ | - | - | 0.025 | - | - | - | - | - | - |
| $Tb_2O_3$ | - | - | - | - | 0.028 | - | - | - | - |
| $Eu_2O_3$ | - | - | - | 0.027 | - | - | - | - | - |

Each glass slab or plate thus produced was subdivided to provide a series of samples. These were subjected to a sequence of actinic radiation exposures and heat treatments in accordance with prior practice as described, for example, in above-mentioned U.S. Patent Nos. 4,017,318 and 4,134,747. In general, each group of samples was given an initial actinic radiation exposure with individual samples being progressively removed. This provided a series of samples with progressively longer exposure times.

In the following Examples, two radiation systems were employed. In Example 1, glass samples were exposed to radiation from an 800 watt (800 J/sec), high pressure, mercury vapour arc lamp having a substantial output in the vicinity of 300 nm. In the remaining Examples, the glass samples were exposed to radiation from a high pressure, mercury-xenon vapour lamp, rated at 2500 watts (2500 J/sec). The radiation was reflected from a pair of 45° mirrors and collimated in a Model 390 Ultraviolet Exposure System, manufactured by Optical Radiation

Corporation. It will, of course, be appreciated that other ultraviolet radiation sources may be used. Actually, a source peaking at a lower wavelength should be more effective for the present purposes.

Following exposure, each group of samples was given a predetermined heat treatment at a temperature above the glass transformation range. Each group was then cooled and subjected to a second actinic radiation exposure using the ultra-violet source previously employed. The individual samples within each group were given progressively longer exposures corresponding to the initial exposure practice. Then, the several sample groups were given a second heat treatment. The first group was heat treated separately, while the remaining groups were given a combined second exposure and heat treatment in accordance with the practice disclosed in United States Patent No. 4,092,139.

EXAMPLE 1

The samples were exposed at ambient temperature to an 800 watt (800 J/sec) ultra-violet lamp positioned a distance of 18" (46 cm) from the samples. Progressive exposure times of 0, 4, 8, 15, 30 and 60 minutes were employed with individual samples.

The samples were then heat treated at 460°C, for 30 minutes, cooled, and reheated at 540°C for 1 hour. Following this, the samples were cooled and given a second exposure to the ultra-violet lamp. This exposure was at a distance of 9" (23 cm) and progressive times were 0, 15, 20, 60 and 120 minutes.

The re-exposed samples were again heat treated, this time for 20 minutes at 460°C. Following this, the samples were examined and the following colour development observed correlating with increasing initial exposure time: monochrome blue-gray, magentas and oranges. Colours were relatively intense.

EXAMPLE 2

The samples in this group were exposed at ambient temperature to a stronger source of radiation for a series of shorter times. Specifically, a 2500 watt (2500 J/sec) lamp was employed with light reflected twice by 45° mirrors, the total light path being 40 inches (100 cm). Progressive individual exposure times were 0, ½, 1, 3, 4, 5, 6½ and 8½ minutes.

Following exposures, the samples were heat treated for 30 minutes at 520°C. The samples were then cooled and placed in a hot plate while being re-exposed to radiation from the lamp described above. Thus, the glasses combined a 460°C heat treatment with progressive exposures as in Example 1, that is, 0, 15, 30, 60 and 120 minutes,

When this set of samples was cooled and examined, the following sequence of colour development with increasing exposure was observed: monochrome greens, yellow-green, dark-green, bluish green, blue and browns. Colour intensity was fair to good,

EXAMPLES 3, 4 and 5

The samples in each of these groups were treated in a manner identical to that described in Example 2. Thus, the same times and conditions of exposure and heat treatment were employed.

The following sequence of colour development, corresponding to increasing initial exposure time, was observed in the samples of Example 3: pistachio greens, bluish greens and browns. The colours were less intense than those in Example 2.

An essentially corresponding sequence of colours was observed in the samples of Example 4. However, the colours were somewhat more intense than in Example 3.

The samples of Example 5 were observed to provide this sequence of colour development: light greens, bluish

greens and brownish ambers. Again, colour intensity was somewhat greater than in Example 3.

EXAMPLES 6, 7 and 8

The samples in each of these groups were also treated in identical manner to those in Example 2, with one exception. A slightly different set of sample removal times was employed, thus creating a slightly different set of progressive exposure times. This new schedule was 1/4, 1/2, 1, 1 1/2, 2 1/2, 3, 5, 6 and 8 minutes,

This series of colour development was observed in the samples of Example 6: grayish green, blue, purple, red, orange and yellow. Colour intensity was excellent.

The colour sequence observed in the samples of Example 7 was: green, blue, purple and copper red. The colours were quite intense.

The samples of Example 8 demonstrated this colour sequence: light blue, dark blue, copper and red. Again, intensity was very good.

EXAMPLE 9

The samples in this group were exposed to light from the 2500 watt (2500 J/sec) lamp of Example 2 in accordance with the conditions described therein, except for exposure times. Progressive times for these samples were 0, 1, 2, 3, 4, 5, 6, 7, 8, 9, 10, 12, 14, 16, 18 and 20 minutes. Following this initial exposure, the samples were heat treated at 460°C, for ½ hour, cooled, re-heated to 530°C and held for ½ hour.

Thereafter, the samples were cooled and given a combined second exposure and heat treatment as described in Example 2. When cooled and observed, the samples showed this sequence of colour development: yellowish greens, greens, bluish greens, purples and magentas. Colour intensity was very good.

The unique characteristics of the present invention may be further illustrated with reference to

the accompanying drawings wherein:

FIGURE 1 is a graphical illustration of transmittance curves for glasses characterised by different sensitising agents; and

FIGURE 2 is a graphical illustration comparing the spectral sensitivity of a cerium-sensitised glass with a copper-sensitised glass.

FIGURE 1 depicts a series of spectrophotometric curves for a series of glasses wherein the essential ingredient difference is the sensitising agent employed. In the graph, radiation wavelengths from 230 to 400 nm are plotted along the horizontal axis and percent transmittance at each wavelength is plotted along the vertical axis.

The measurements employed to plot the several curves were made on polished glass samples 1 mm in thickness. The measuring instrument was a Varian Cary-17 DX spectrophotometer.

Curve A was measured on a glass essentially corresponding in composition to the glass of Example 2 in United States Patent No., 4,092,139, that is, a glass containing 0.04% cerium oxide as sensitiser. Curve B was measured on a glass having the compositon of sample 1 in Table 1 above. Curve C was measured on a glass having the composition of sample 5 in the Table. Similar curves were plotted for similar sodium silicate glasses containing, respectively, 0.06% $Sm_2O_3$, 0.05% $Pr_2O_3$ and 0.05% $Eu_2O_3$. These are not plotted in FIGURE 1 since they are essentially indistinguishable from Curve C.

It will be observed that glasses containing the present sensitisers have rather different transmittance curves. In particular, they transmit substantially further into the ultra-violet range than do cerium-containing glasses.

FIGURE 2 shows the spectral sensitivity curve

for the cerium-sensitised glass of United States Patent No. 4,092,139 (Curve A) and that for the glass of sample 1 in the above Table (Curve B). Radiation wavelengths between 270 and 340 nm are plotted on the horizontal axis. There are no absolute values for sensitivity on the vertical axis. Rather, relative densities of colour development at different wavelengths of constant exposure were visually observed. Hence, no absolute comparison is contemplated, but only the obvious difference in general nature of the curves.

Specifically, the optimum wavelength for exposing the cerium-sensitised glass, the peak of the curve, is from 300 to 310 nm. In contrast, the copper-sensitised glass appears to peak below 270 nm. However, measurements could not readily be made at lower wavelengths, so that a peak value was not ascertained. It is apparent, however, that such peak value is at or below 270 nm. This fact, coupled with the transmittance curves of FIGURE 1, shows that the copper-sensitised glass may, for example, be exposed at from 250 to 270 nm. In contrast, the cerium-sensitised glass is exposed in the from 290 to 320 nm range. Thus, a glass containing both sensitisers might have unique effects obtained by colour development at different wavelengths.

CLAIMS:

1. A polychromatic glass, at least a portion of which contains microcrystals of alkali fluoride in a concentration of at least 0.005%, by volume, and is integrally coloured by metallic silver particles less than 200Å ($2 \times 10^{-8}$ m) in the smallest dimension, the silver particles being deposited (a) as discrete colloidal particles, (b) within the microcrystals and/or (c) on the surface of the microcrystals, characterised in that the glass contains an oxide of copper, samarium, terbium, praeseodymium and/or europium as a sensitising agent.

2. A polychromatic glass according to claim 1, characterised in that the glass contains cerium oxide as a supplemental sensitising agent.

3. A polychromatic glass according to claim 1 or claim 2 characterised in that the selected sensitising agent is present in an amount of from 0.01 to 0.25%.

4. A polychromatic glass according to any of claims 1 to 3 characterised in that the glass contains from 0.1 to 1.0% of tin oxide and/or antimony oxide as a thermoreducing agent.

5. A process for the production of a polychromatic glass according to claim 1 characterised in that it comprises:

melting a glass batch contaning the constituents of an alkali fluoride and at least one silver halide selected from silver chloride, silver bromide and silver iodide, and at leat one sensitising agent selected from the oxides of copper, samarium, terbium praeseodymium and europium; forming the melt; exposing at least a portion of the glass to ultra-violet radiation at ambient temperature; heating the exposed glass to a temperature between the transformation range thereof and the softening point thereof to cause growth of microcrystals of alkali fluoride with at least one silver halide selected from silver chloride, silver bromide and silver iodide; subjecting the glass to a second ultra-violet radiation exposure and a second heat treatment to cause metallic silver particles less than 200Å ($2 \times 10^{-8}$m) in the smallest dimension to be deposited as discrete colloidal particles, or within or on the surface of the alkali fluoride microcrystals; and cooling the glass.

6. A process according to claim 5 characterised in that the glass is exposed to ultra-violet radiation of less than 300 nm wavelength.

7. A process according to claim 5 or claim 6 characterised in that the second heating step and the second radiation exposure step are carried out simultaneously.

8. A process according to claim 7 characterised in that the combined steps are carried out at a temperature below 300°C.

9. A process according to any of claims 5 to 8 characterised in that the glass contains two sensitising agents and is given separate ultra-violet radiation exposures at two different wavelengths.

10. A potentially polychromatic glass characterised in that it comprises an alkali metal silicate base glass containing dissolved therein an alkali fluoride, at least one silver halide selected from silver chloride, silver bromide and silver iodide, and at least one sensitising agent selected from the oxides of copper, samarium, terbium, praeseodymium and europium and optionally tin oxide and/or antimony oxide as a thermoreducing agent.

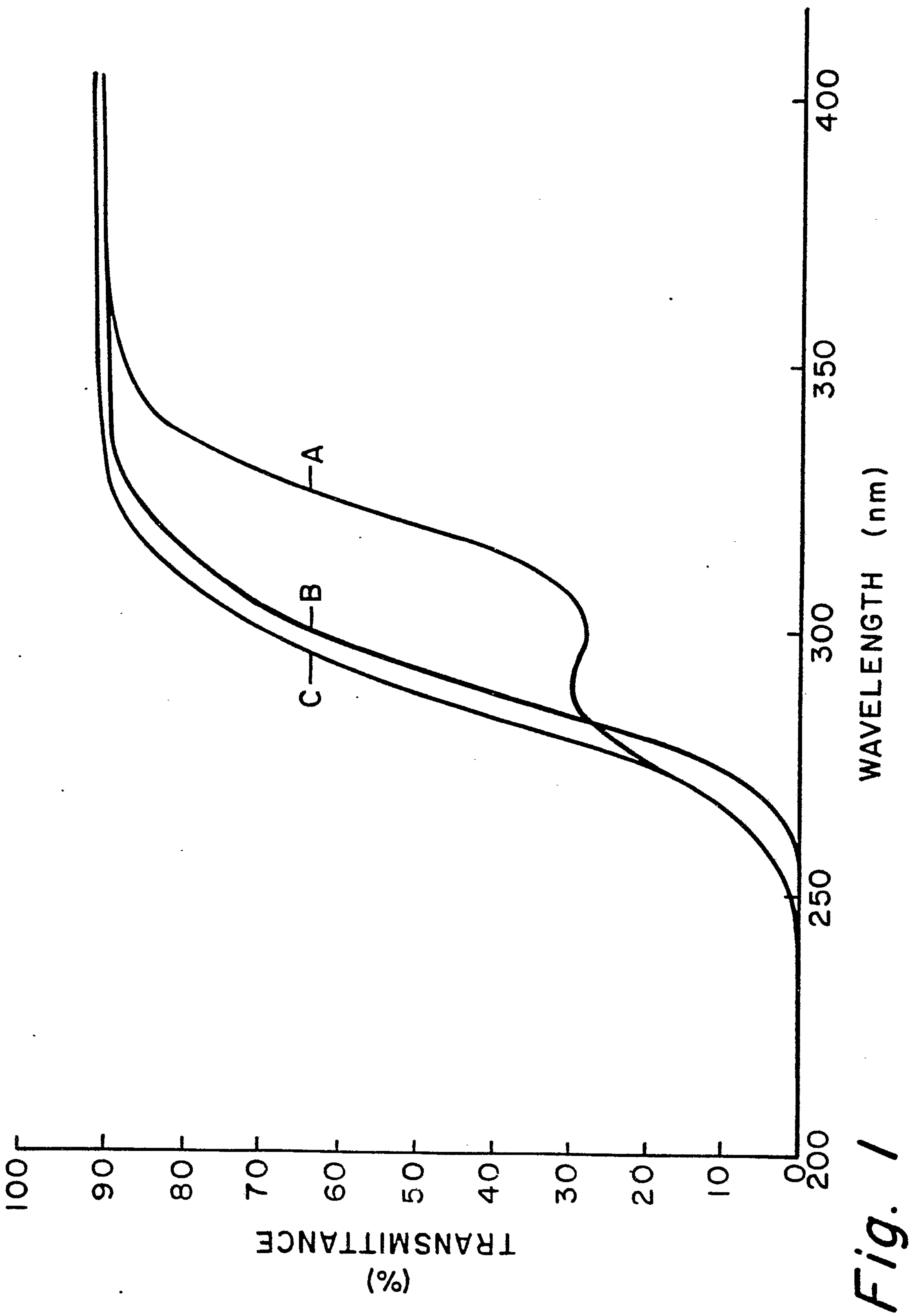
TRANSMITTANCE (%)
100
90
80
70
60
50
40
30
20
10
0
200
250
300
350
400
WAVELENGTH (nm)
A
B
C

Fig. 1

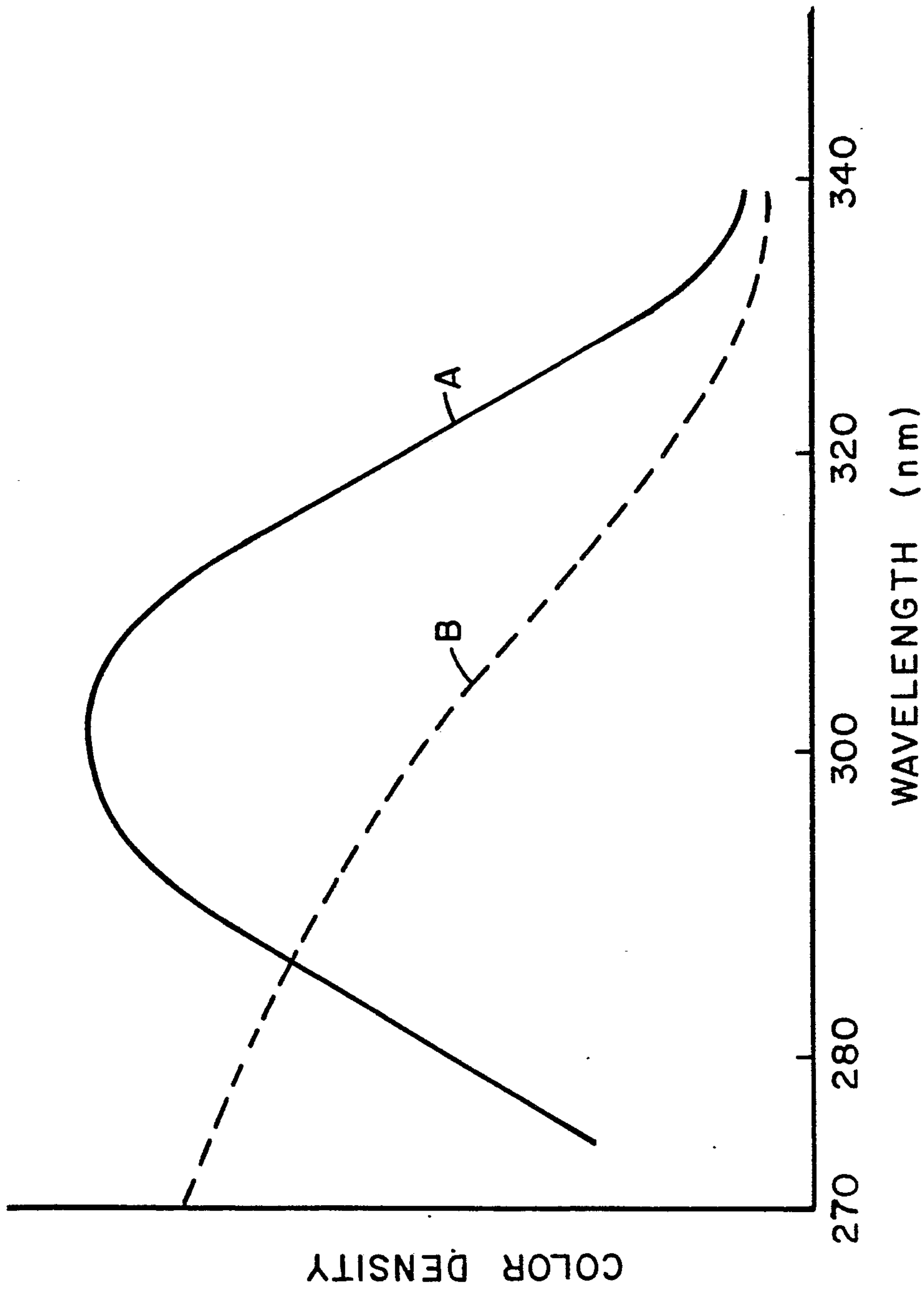


Fig. 2